# DEMANDE DE BREVET EUROPEEN

(11) **EP 1 517 016 A1**
(43) Date de publication de la demande: **23.03.2005**
(21) Numéro de dépôt: 04300615.4
(22) Date de dépôt: 21.09.2004
(51) Int. Cl.: F02B 23/06, F02F 3/26

(54) **Chambre de combustion destinée à réduire les émissions de suies**

(30) Priorité: 22.09.2003 FR 0350583
(71) Demandeur: Renault s.a.s., 92100 Boulogne Billancourt (FR)
(72) Inventeur: HENNEQUIN, Manuela, 91590, BAULNE (FR); HILAIRE, Nathalie, 91190, GIF SUR YVETTE (FR); LAHJAILY, Hamid, 91410, DOURDAN (FR)

(57) **Abrégé**

Chambre de combustion de moteur à injection directe et à allumage par compression formée par un cylindre dans lequel un piston (14) est adapté à coulisser, le cylindre étant obturé par une portion de culasse (12) disposée au regard du piston (14) qui présente une cavité en forme de bol (18), la surface formant bol (18) présentant un téton central (20) en saillie et une partie périphérique (23) entourée par une zone de chasse annulaire (24), la portion de culasse (12) comporte un injecteur central (30) en saillie, comprenant au moins deux rangées de trous (22), caractérisée en ce que le téton central (20) comprend une cavité, concentrique par rapport au téton central, en forme de bol (21).

## Description

La présente invention se rapporte à une chambre de combustion de moteur multicylindre à injection directe et à allumage par compression selon le cycle Diesel, destinée à réduire les émissions de suies.

Les chambres de combustion destinées aux moteurs à allumage par compression sont formées par un cylindre dans lequel un piston est adapté à coulisser, ledit cylindre étant obturé par une portion de culasse disposée au regard d'une paroi libre dudit piston.

Différentes formes de paroi libre de piston ont été proposées, tant dans le but d'améliorer le rendement du moteur que dans celui d'augmenter la combustion des suies pour limiter les émissions de fumées.

On connaît d'après le document japonais JP-11-148353 un type de chambre de combustion dont la paroi libre du piston est usinée de façon à présenter une surface formant bol. Cette surface formant bol présente un téton central en saillie et une partie périphérique entourée par une zone de chasse annulaire.

Un injecteur central permet d'injecter le carburant selon deux flux distincts pour améliorer la combustion dans la chambre. Ladite portion de culasse comporte bien évidemment des moyens d'admission du comburant, l'air, et des moyens d'échappement des gaz brûlés. Durant la compression du comburant l'injecteur projette le carburant à la fois contre le téton central et en nappe conique contre la partie périphérique du bol, la combustion de la portion de carburant projetée contre le téton central provoquant l'allumage de la portion de carburant projetée contre ladite partie périphérique avant qu'elle ne l'atteigne.

Ni la géométrie particulière de la paroi libre du piston, ni la double injection de carburant contre la surface de la paroi, ne permet un mélange suffisamment intime du carburant et du comburant pour que la combustion soit suffisamment complète et que des suies n'apparaissent pas.

Un objet de la présente invention est de proposer une chambre de combustion qui permette d'assurer non seulement un mélange intime du comburant mais également une meilleure utilisation de l'oxygène présent dans la chambre de combustion.

Ce but est atteint par une chambre de combustion de moteur à injection directe et à allumage par compression formée par un cylindre dans lequel un piston est adapté à coulisser, le cylindre étant obturé par une portion de culasse disposée au regard du piston qui présente une cavité en forme de bol, la surface formant bol présentant un téton central en saillie et une partie périphérique entourée par une zone de chasse annulaire, la portion de culasse comporte un injecteur central en saillie, comprenant au moins deux rangées de trous, caractérisée en ce que le téton central comprend une cavité, concentrique par rapport au téton central, en forme de bol.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en perspective d'un premier mode de réalisation de l'invention ; et,
- la Figure 2 est une vue schématique partielle en perspective d'un mode de réalisation selon l'état de la technique.

De façon classique, dans une chambre de combustion d'un moteur à combustion interne à allumage par compression, une forme de révolution de type tore a été usinée dans le piston pour former une cavité sensiblement en forme de bol. Les jets de carburant sont guidés alors par la surface du bol. Cette cavité peut être munie d'un téton central. Cependant, la consommation d'oxygène contenu dans ce type de chambre est incomplète, en particulier à pleine charge dans la zone située au-dessus du téton.

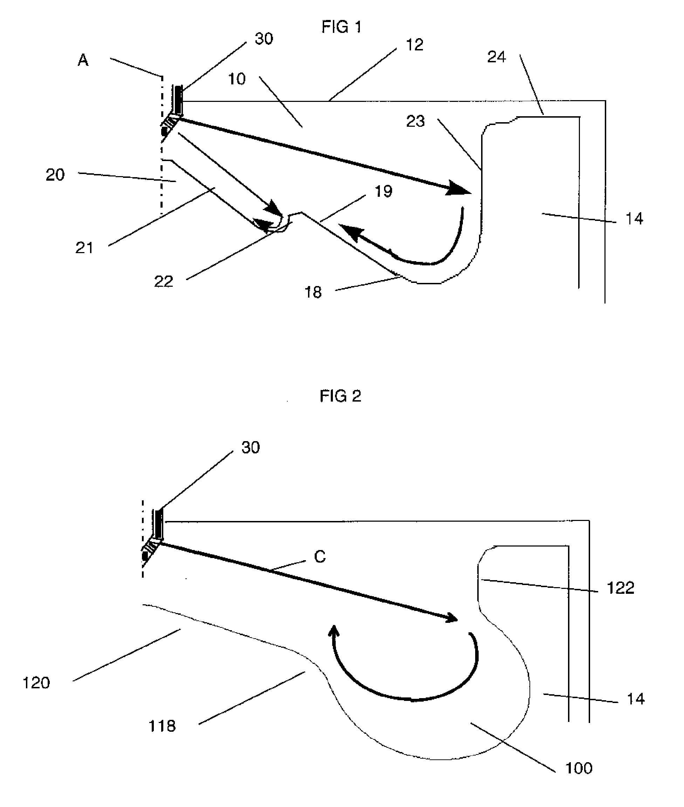

La figure 2 représente une variante de forme de cavité 100 de l'état de la technique dans lequel le téton central 120 a une forme proéminente de façon à ce qu'il occupe l'espace habituellement occupé par l'oxygène. De fait, la pente 118 de raccordement entre le tore et le téton 120 est élevée. La combustion a alors tendance à se recouvrir, comme indiqué par les flèches C, lorsque la dynamique des jets de carburant est importante. Ce recouvrement a pour conséquence, d'augmenter les émissions de suies.

La Figure 1 illustre une portion de chambre de combustion 10 conforme à l'invention qui est délimitée sur la Figure 1 par une portion 12 d'une culasse à front plat d'un moteur, laquelle referme un cylindre dans lequel un piston 14 est situé dans une position de point mort haut.

Le piston 14, présente une cavité usinée autour de l'axe central A du piston 14 de façon à former une surface formant bol 18. Cette surface formant bol 18, présente un téton central 20 en saillie dont l'axe de symétrie est confondu avec l'axe central A du piston 14. Selon ce même axe central A, un injecteur central 30 en saillie de la portion 12 de culasse situé au regard du piston 14, est destiné à injecter le carburant dans la chambre de combustion 10.

En outre, la surface formant bol 18 présente une partie périphérique 23 qui est entourée par une zone de chasse annulaire 24 joignant la paroi interne du cylindre. Selon la variante de réalisation de la figure 1, la partie périphérique 23 est sensiblement un cylindre d'axe parallèle à l'axe du piston 14. Cependant, cette partie périphérique 23 pourrait comprendre une lèvre 122 comme représentée à la figure 2.

Selon une caractéristique de l'invention, le téton central 20 comprend une cavité concentrique 21 par rapport au téton 20. Cette cavité est formé sur la pente 19 de raccordement entre le téton et le fond du bol 18.

Selon l'invention, le nez de l'injecteur 30 comprend deux rangés de trous. Une première rangé de trous, située le plus proche de la culasse 12, est destinée à générer des jets de carburant dirigés vers la partie périphérique 23. La deuxième rangé de trous, située le plus proche du téton 20 central, est destinée à générer des jets de carburant vers la cavité 21 du téton 20.

La forme de la cavité 21 du téton 20 est sensiblement la même que celle de la cavité du piston, aux dimensions près, à savoir une forme de bol 18. La cavité 21 comprend une lèvre qui forme un bossage 22 en saillie sur la pente de raccordement entre le téton 20 et le fond du bol 18. Les dimensions de la cavité 21 sont choisies, par exemple, pour que le bossage 22 se situe sensiblement au milieu de la pente 19 de raccordement. La position de la lèvre sur pente 19 de raccordement entre le téton 20 et le fond du bol peut dépendre également de la longueur des jets de carburant de la deuxième rangé de trous de l'injecteur 30.

L'orientation et la taille des trous de la deuxième rangée de trous de l'injecteur 30 est déterminée pour que lors de l'injection l'extrémité de chaque jet impacte le sommet du bossage 22. La courbure et la hauteur du bossage 22 sont également déterminées pour que la combustion des jets de carburant de la deuxième rangé de trous soit guidée par la paroi de la cavité 21 du téton 20.

Du fait de la présence de la cavité 21 du téton 20, la pente 19 de raccordement entre le fond du bol et le téton 20 reste suffisamment faible pour que la combustion des jets de carburant de la première rangé de trous dans la cavité 21 du téton 20 ne se recouvre pas. A tire d'exemple la pente de raccordement est de l'ordre de 25°.

L'oxygène située au-dessus du téton est consommée par la combustion des jets de carburant de la deuxième rangée de trous dans la cavité 21 du téton 20.

## Revendications

1. Chambre de combustion de moteur à injection directe et à allumage par compression formée par un cylindre dans lequel un piston (14) est adapté à coulisser, le cylindre étant obturé par une portion de culasse (12) disposée au regard du piston (14) qui présente une cavité en forme de bol (18), la surface formant bol (18) présentant un téton central (20) en saillie et une partie périphérique (23) entourée par une zone de chasse annulaire (24), la portion de culasse (12) comporte un injecteur central (30) en saillie, comprenant au moins deux rangées de trous, **caractérisée en ce que** le téton central (20) comprend une cavité, concentrique par rapport au téton central, en forme de bol (21).

2. Chambre de combustion selon la revendication 1, **caractérisée en ce que** le bord extérieur de la cavité (21) du téton (20) central comprend une lèvre (22).

3. Chambre de combustion selon la revendication 2, **caractérisé en ce que** la pente du téton central (20) est de l'ordre de 25°.

4. Chambre de combustion selon l'une quelconque des revendications 1 à 3, **caractérisée en ce que** le diamètre des trous de la rangés située le plus proche du téton centrale (20) est plus faible que celui des trous de la rangés située le plus loin du téton central (20).

5. Chambre de combustion selon l'une quelconque des revendications 1 à 4, **caractérisée en ce que** les jet de carburant générés par les trous de la rangées située le plus proche du téton centrale (20) sont dirigés vers le bord supérieur de la cavité (21) du téton central (20).

6. Chambre de combustion selon l'une quelconque des revendications 1 à 5, **caractérisée en ce que** les jet de carburant généré par les trous de la rangées située le plus loin du téton central (20) sont dirigé vers la partie périphérique (23) du bol (18).
